# FASCICULE DE BREVET EUROPEEN

(11) **EP 4 485 089 B1**
(45) Date de publication et mention de la délivrance du brevet: **16.09.2026**
(21) Numéro de dépôt: 24204277.8
(22) Date de dépôt: 03.12.2019
(51) Int. Cl.: G04B 18/08, G04B 17/06

(54) **PROCÉDÉ DE RÉALISATION D'UN AXE DE BALANCIER ET AXE DE BALANCIER**
VERFAHREN ZUR HERSTELLUNG EINER UNRUHACHSE UND UNRUHACHSE
METHOD FOR PRODUCING A BALANCE AXLE AND BALANCE AXLE

(30) Priorité: 06.12.2018 CH 15042018
(43) Date de publication de la demande: 01.01.2025
(62) Numéro(s) de document de la (des) demande(s) initiale(s) en application de l'article 76 CBE: 19213301.5 / 3 663 865
(73) Titulaire: Richemont International S.A., 1752 Villars-sur-Glâne (CH)
(72) Inventeur: TOBENAS BORRON, Susana del Carmen, 2017 Boudry (CH); GOUIDER, Mohamed, 2000 Neuchâtel (CH); POLLET-VILLARD, Aurélien, 25300 Pontarlier (FR)
(74) Mandataire: Patentsmith SA

(56) Documents cités:
- EP-A1- 2 757 423
- EP-A1- 2 757 424
- EP-A1- 3 220 212
- EP-A1- 3 258 325
- CH-A4- 1 025 860
- DE-B- 1 207 289
- FR-A1- 2 871 080

## Description

### Domaine technique

La présente invention se rapporte au domaine de l'horlogerie. Elle concerne, plus particulièrement, un procédé de réalisation d'un axe de balancier.

### Etat de la technique

Dans un mouvement mécanique d'horlogerie, le balancier-spiral est un élément important dans la détermination de la régularité de la marche. Le balancier spiral est assemblé sur un arbre, appelé axe de balancier, pivotant dans des paliers. La qualité du pivotement a une grande influence sur la performance du mouvement, en termes de précision, de rendement et de durabilité notamment.

La réalisation d'axes de balancier de manière industrielle est particulièrement complexe. En effet, l'axe est décolleté dans une barre, dont le matériau doit être suffisamment tendre pour être usiné de manière précise et rapide, sans induire d'usure précoce des outils de coupe. Mais les zones interagissant avec les paliers, appelées pivot, doivent également être suffisamment dures, pour résister à l'usure du fonctionnement. Par ailleurs, l'état de surface des pivots doit être particulièrement travaillé et il est aujourd'hui obtenu par des opérations de roulage, qui nécessitent un matériau présentant une dureté d'au moins 600Hv. Le document EP2757423 dévoile un tel procédé de fabrication d'un axe horloger.

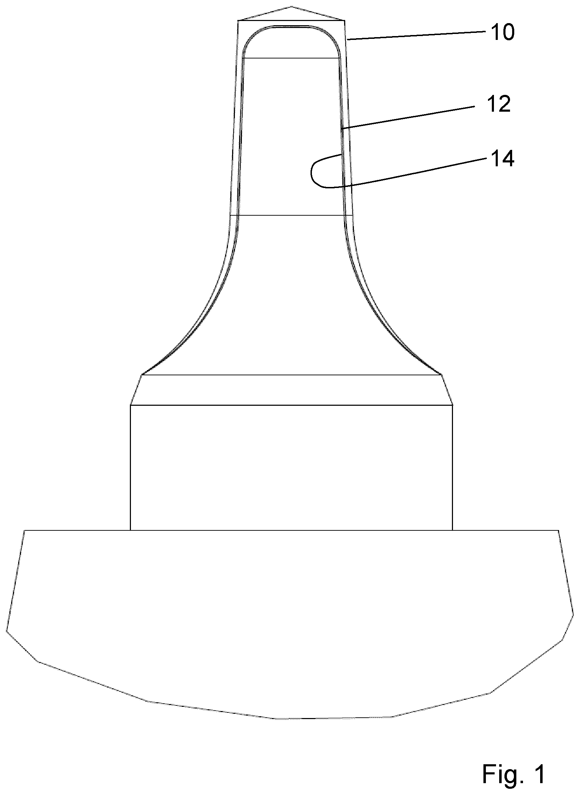

Ces opérations de roulage permettent non seulement d'obtenir l'état de surface souhaité, mais également les formes requises pour les pivots avec une précision dimensionnelle bien maitrisée, avec une tolérance de l'ordre du micron. Le décolletage est donc effectué selon des cotes intermédiaires, qui tiennent compte de la matière enlevée lors du roulage. Sur la figure 1, on a représenté selon la ligne 10, la forme d'un axe issu du décolletage, et selon la ligne 12, sa forme après roulage. Le roulage permet d'obtenir la géométrie recherchée pour les pivots. Eventuellement, une opération supplémentaire de finition tribologique, tel qu'un polissage est encore effectuée. Cette dernière entraîne une abrasion de matière supplémentaire et permet d'obtenir les cotes selon la ligne 14, qui sont les cotes définitives.

Le matériau choisi doit donc être aisément décolletable, et être ensuite apte à être durci par des traitements de trempe ou de revenu. L'usinabilité d'un matériau peut être corrélée directement à son effort spécifique de coupe, mesuré par les fabricants par le paramètre Kc, donné généralement en N/mm² ou MPa. On utilise généralement des aciers martensitiques au carbone incluant du plomb et des sulfures de manganèse pour améliorer leur usinabilité. Un acier de ce type utilisé en horlogerie est connu sous la référence 20AP.

Bien que donnant satisfaction en termes d'usinabilité et d'état de surface, les aciers actuellement utilisés présentent l'inconvénient d'être sensibles à une exposition à un champ magnétique, ce qui peut ensuite perturber la marche de la montre.

Actuellement, les horlogers cherchent donc des alliages alternatifs, présentant des propriétés similaires à celles des aciers martensitiques, à savoir une bonne usinabilité, une aptitude au durcissement par des traitements divers, et qui soient autant amagnétiques que possible. L'un des buts de ces tentatives est de conserver les techniques d'usinage jusqu'ici maitrisées, pour reproduire les formes de pivot éprouvées et donnant satisfaction. Des exemples d'alliages de l'art antérieur sont dévoilés par exemple dans les documents CH1025860 et DE1207289.

Contrairement à l'approche actuellement suivie, la présente invention vise à changer de paradigme et a pour but de proposer un nouveau procédé de réalisation d'un axe horloger, particulièrement d'un axe de balancier.

### Divulguation de l'invention

De façon plus précise, un premier aspect de l'invention concerne un procédé de réalisation d'un axe de balancier en alliage présentant un effort spécifique de coupe supérieur ou égal à 2400 N/mm². Le procédé peut être effectué au moyen d'une machine comprenant un organe de préhension rotatif et un laser d'usinage monté sur un actuateur à commande numérique. Le procédé selon l'invention comprend les étapes suivantes :
- se doter d'une barre dudit alliage,
- mettre la barre en rotation selon son axe longitudinal,
- mettre la barre en forme par usinage laser pour obtenir un axe de balancier comprenant un pivot à chaque extrémité,
- effectuer un traitement de finition tribologique, sans réalisation d'opération de roulage après la mise en forme.

La remise en cause des techniques d'usinage traditionnelles et l'utilisation d'une nouvelle technique, aux possibilités insoupçonnées, permettent d'explorer de nouveaux champs et de nouvelles possibilités en termes de matériaux.

### Brève description des dessins

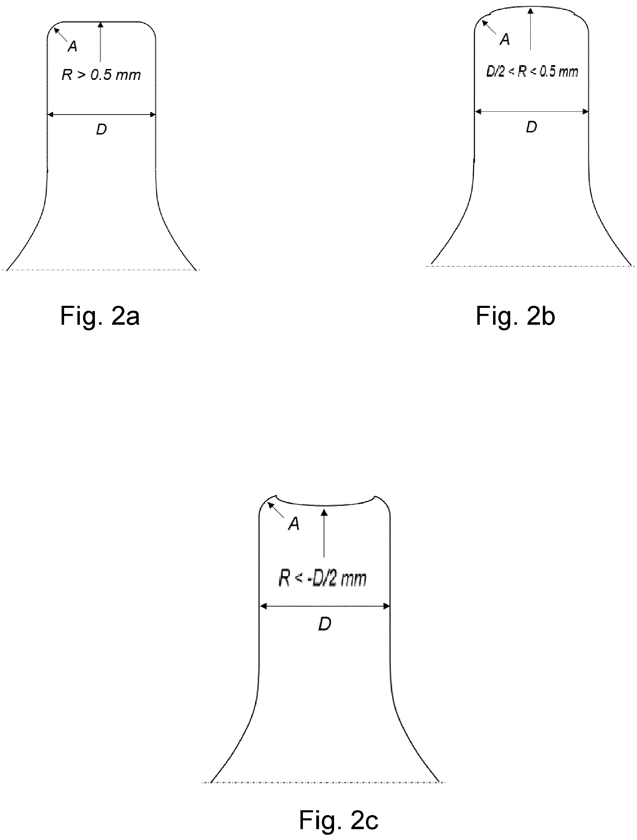

La figure 1 annexée représente les géométries d'un axe de balancier au cours de sa réalisation selon un procédé traditionnel, tandis que les figures 2a, 2b et 2c proposent des géométries d'axe de balancier réalisés par le procédé selon l'invention.

### Mode de réalisation de l'invention

De récents développements technologiques ont proposé d'utiliser une nouvelle technique de fabrication, basée sur une machine à commande numérique 5 axes, dont l'actuateur est équipé d'un laser à impulsions ultracourtes (USP). Ce type de laser produit un spot laser uniforme de l'ordre de 25 µm. Ce laser est utilisé pour irradier une pièce à usiner, sous la forme d'un barreau mis en rotation dans un organe de préhension rotatif, à l'instar d'une décolleteuse.

Une très grande quantité d'énergie est appliquée sur la pièce pendant une courte période. La fonte ou les changements thermiques ne se produisent pas parce que le matériau est vaporisé instantanément. De plus, le laser est mis en rotation avec ce qu'on appelle une optique de trépanation. Ainsi, des faisceaux avec des angles différents peuvent être envoyés sur la pièce, en modifiant automatiquement le diamètre de rotation et l'angle d'incidence.

En conséquence, grâce aux directions que peut prendre le faisceau, on peut envisager de réaliser des axes et des pivots avec des formes conventionnelles, c'est-à-dire des formes actuellement réalisées par décolletage et roulage. D'autres formes sont également possibles, qui ne seraient pas réalisables par décolletage, ni par roulage. Les géométries visées sont obtenues directement lors de l'étape d'usinage laser, sans opération de roulage.

Ainsi, à titre d'exemple, la figure 2 donne trois possibilités, respectivement aux figures 2a, 2b et 2c.

L'extrémité du pivot illustré en 2a est plate. Elle se décrit comme un cylindre circulaire droit de diamètre D compris entre 50 et 100 µm (Symétrie axiale). La base de ce cylindre présente un arc de cercle de 90° de rayon A, compris entre 5 et 25 µm, partant de la génératrice du cylindre. De façon tangentielle et continue, un rayon de courbure R supérieure à 0.5 mm, prolonge le rayon A jusqu'au centre de la base du cylindre.

L'extrémité du pivot illustré en 2b est convexe. Elle se décrit comme un cylindre circulaire droit de diamètre D compris entre 50 et 100 µm (Symétrie axiale). La base de ce cylindre présente un arc de cercle de 90°, de rayon A compris entre 5 et 25 µm, partant de la génératrice du cylindre. De façon tangentielle et continue, un rayon de courbure R compris entre 0.1 et 0.5 mm, plus généralement compris entre D/2 et 0.5mm, prolonge le rayon A jusqu'au centre de la base du cylindre.

L'extrémité du pivot illustré en 2c est concave. Elle se décrit comme un cylindre circulaire droit de diamètre D compris entre 50 et 100 µm (Symétrie axiale). La base de ce cylindre présente un arc de cercle de 90°, de rayon A compris entre 5 et 25 µm, partant de la génératrice du cylindre. De façon tangentielle et continue, un rayon de courbure R inférieure à -D/2, de préférence inférieur à -0.35 mm, prolonge le rayon A jusqu'au centre de la base du cylindre.

Les exemples donnés ci-dessus ne sont pas limitatifs et les formes décrites entre la partie cylindrique et la partie plate, respectivement convexe, respectivement concave, peuvent être adaptées, ainsi que les rayons de courbure des parties convexe, respectivement concave.

De manière particulièrement avantageuse et inattendue, il a été observé que cette technologie de décolletage laser permettait d'obtenir un très bon contrôle du procédé et une fabrication de pièces dans les dimensions utilisées pour des pivots horlogers, avec non seulement des tolérances très réduites mais également des états de surface remarquables.

Compte tenu des déplacements relatifs de la barre à usiner et de la tête de trépanation, l'obtention d'une précision suffisante apparaissait a priori comme une gageure. Pour fixer les idées, le diamètre de l'axe au niveau du pivot est d'environ 50 µm et la tolérance est de l'ordre du µm.

Pour ce qui concerne les états de surface obtenus, ils sont meilleurs que ceux obtenus après un décolletage conventionnel. En sortie de décolletage, on mesure une rugosité Ra comprise entre 0.025 et 0.1 µm après usinage laser, alors qu'elle est de 0.2 µm après décolletage conventionnel. La qualité de l'état de surface permet de se passer de roulage ultérieur.

Ainsi, pour obtenir un état de surface conforme aux spécifications requises, une simple étape de finition tribologique/polissage, pour affiner davantage l'état de surface. Ce type d'opération est effectué en vrac, par agitation dans un milieu chargé de particules abrasives. On peut donc traiter un grand nombre de pièces, de manière très efficiente. On n'observe pas de changement de géométrie au cours de cette opération, mais seulement une réduction homogène des dimensions, de quelques µm, en fonction de la durée de l'opération.

De manière encore plus intéressante, des essais ont été réalisés avec des matières non utilisées pour ce genre d'applications, ces matières étant connues pour leur faible usinabilité avec des outils traditionnels, de type burin de décolletage. En effet, ces matières présentent des efforts spécifiques de coupe supérieurs ou égaux à 2400 N/mm² et entrainent une usure rapide des outils de coupe en carbure, ce qui les rend inutilisables industriellement. De plus, au vu des faibles dimensions des axes et des pivots, les contraintes mécaniques imposées lors du décolletage rendent quasi impossibles la réalisation de pièces dans ce type de matière.

Ainsi, des essais ont notamment été effectués avec des alliages de la famille des Inconel comprenant au moins 50% de Nickel, entre 13 et 30% de Chrome et des éléments choisis parmi le Fe, Mo, Nb, Ta, Co, Mn, Cu, Al, Ti, Si, C, S, P et B. Ces alliages présentent l'avantage d'être amagnétiques.

Plus particulièrement, les alliages utilisés peuvent être un inconel 718. L'alliage comprend entre 50 et 55% de Nickel, entre 17 et 21% de Chrome, entre 2,8 et 3,3% de Molybdène, entre 4,75 et 5,50% de Niobium, entre 0 et 1,0% de Cobalt, entre 0 et 0,35% de Manganèse, entre 0 et 0,30% de Cuivre, entre 0,20 et 0,80% d'Aluminium, entre 0,65 et 1,15% de Titane, entre 0 et 0,35% de Silicium, entre 0 et 0,08% de Carbone, entre 0 et 0,015% de Souffre, entre 0 et 0,015% de Phosphore, et entre 0 et 0,006% de Bore, et le solde de Fer.

Plus généralement, on peut utiliser différentes matières présentant un effort spécifique de coupe supérieur ou égal à 2400 N/mm². Les alliages choisis peuvent éventuellement être traités thermiquement avant leur mise en forme, par exemple pour modifier certaines propriétés, comme leur dureté. Ces traitement thermiques, appelés vieillissements pour ce type d'alliage, sont effectués avant l'usinage laser, ce qui permet d'éviter tout changement dimensionnel pouvant survenir lors des traitements thermiques.

Ainsi, les matières suivantes peuvent être utilisées :
- ISO P : Aciers fortement alliés (> 5% d'éléments d'alliage), recuits, trempés et revenus ;
- ISO S : Superalliages réfractaires hors titane (Base fer, base nickel, base Cobalt), recuits, vieillis, coulés ;
- Aciers inoxydables austénitiques : 1.4472 et Biodur^{®}108, dont il a été démontré par des essais que leur effort spécifique de coupe Kc est supérieur ou égal 2400 N/mm² (bien que faisant partie du groupe ISO M) ;
- ISO H : Aciers trempés, trempés et revenus, fonte en coquille (coulée ou coulée et vieillie).

Les alliages mentionnés étant particulièrement durs, éventuellement après un traitement thermique ad-hoc, on peut donc se passer d'étapes de durcissement généralement mises en œuvre après un usinage traditionnel. En effet, avec un décolletage traditionnel, les opérations de traitements thermiques de type trempe ou revenu, sont effectués après l'usinage, ce qui nécessite de prendre en compte les contraintes et déformations thermiques subies.

Grâce aux possibilités offertes par l'usinage laser et grâce à la précision que cette technique permet d'obtenir, on peut donc usiner l'axe de balancier, y-compris les pivots, avec la géométrie finale. Une simple étape de finition tribologique ou polissage est préférentiellement effectuée, en conservant la géométrie définie, c'est-à-dire en conservant les angles ou rayons, une simple contraction par enlèvement de matière régulier pouvant être observée. Le procédé est donc beaucoup mieux maitrisé.

On a ainsi pu réaliser, par décolletage laser, des axes de balancier, y compris les pivots, dans différentes matières présentant des efforts spécifiques de coupes supérieurs ou égaux à 2400 N/mm2. De manière surprenante, le décolletage laser tel que décrit ci-dessus, permet d'obtenir les formes recherchées avec des précisions requises et des états de surface particulièrement bons.

On souligne que les pivots sont mis en forme lors de l'opération de décolletage. Toutes les caractéristiques géométriques de l'axe, y compris les pivots, sont bien réalisées avec une dispersion extrêmement faible. Les dimensions obtenues tiennent compte, le cas échéant, de l'enlèvement de matière lié à une étape de finition, de type polissage ou autre.

Les axes peuvent être utilisés sans ajout d'un revêtement externe. On obtient ainsi des axes homogènes, en termes de matériau et de propriétés.

Un aspect intéressant du procédé de fabrication, est que le laser peut travailler sur toute la longueur de l'axe, hormis le bout de pivot qui relie l'axe à la barre. En modulant les paramètres du laser, on peut ainsi mettre en forme l'ensemble des zones de l'axe, en affinant progressivement l'état de surface. A la différence d'un procédé de décolletage traditionnel où l'axe de balancier est réalisé par section longitudinale, au fur et à mesure de l'avance de la barre, le laser réalise l'axe en travaillant toute sa longueur et en réduisant les diamètres, puis en affinant les états de surface, de manière progressive.

Typiquement, au cours des différentes étapes d'usinage, les paramètres du laser pourront varier dans les gammes suivantes :
- Puissance moyenne : entre 10 et 100 W ;
- Energie par pulse : entre 20 et 400 µJ ;
- Fréquence : entre 100 et 1000 kHz ;
- Durée d'impulsion : entre 500 fs et 20 ps.

Le procédé comprend les blocs d'étapes suivants, chacun comportant une pluralité d'étapes, dont le détail peut être modifié en fonction du savoir-faire de l'homme du métier et des spécificités de la machine utilisée.
- Ebauche de la barre : consiste à réduire le diamètre de la barre pour l'amener à un diamètre de 1 à 3mm,
- Profilage de l'axe de balancier : consiste à donner la forme générale de l'axe de balancier (plateau, rivure, géométrie générale...),
- Piqûre de la rivure : consiste à réaliser la piqûre, ce qui nécessite un positionnement oblique de l'axe, pour réaliser un usinage concave sur le plateau,
- Mise en forme des extrémités des pivots : consiste à réaliser l'état de surface final sur la partie extrémale du pivot.

La réalisation de cette dernière étape par le laser, nécessite que les extrémités soient libres d'accès pour le faisceau. En conséquence, le procédé de fabrication comprend :
- une première étape d'usinage, particulièrement de mise en forme, d'une première extrémité de l'axe tandis que la deuxième extrémité est tenue par la machine, le cas échéant par l'intermédiaire de la barre,
- une deuxième étape de reprise par la machine de l'axe par la première extrémité précédemment usinée, et
- une troisième étape d'usinage, particulièrement de mise en forme, de la deuxième extrémité tandis que la première extrémité est tenue par la machine.

Entre la première et la deuxième étape, l'axe est séparé par tronçonnage du reste de la barre, ce tronçonnage étant effectué au niveau de la deuxième extrémité. Avantageusement, le tronçonnage est effectué par le laser.

De manière avantageuse, l'utilisation d'une tête laser combinée avec une machine à commande numérique 5 axes, permet de réaliser toutes formes sur l'axe, y-compris des formes qui ne sont pas de révolution, dès lors que la rotation de la barre est arrêtée.

## Revendications

1. Procédé de réalisation d'un axe de balancier en alliage présentant un effort spécifique de coupe supérieur ou égal à 2400 N/mm²au moyen d'une machine comprenant un organe de préhension rotatif et un laser d'usinage monté sur un actuateur à commande numérique,
ledit procédé comprenant les étapes suivantes :
- se doter d'une barre dudit alliage,
- mettre la barre en rotation selon son axe longitudinal,
- mettre la barre en forme par usinage laser pour obtenir un axe de balancier comprenant un pivot à chaque extrémité,
- effectuer un traitement de finition tribologique, sans réalisation d'opération de roulage après la mise en forme.

2. Procédé selon la revendication 1, **caractérisé en ce que** l'axe est réalisé avec la géométrie finale lors de la mise en forme par usinage laser.

3. Procédé selon l'une des revendications précédentes, **caractérisé en ce que** les pivots de l'axe sont réalisés avec la géométrie finale lors de la mise en forme par usinage.

4. Procédé selon la revendication 3, **caractérisé en ce que** les pivots de l'axe sont réalisés aux dimensions finales lors du traitement de tribofinition.

5. Procédé selon la revendication 1, **caractérisé en ce que** ledit alliage est choisi dans la famille des Inconel comprenant, en pourcentage massique, au moins 50% de Nickel, entre 13 et 30% de Chrome et des éléments choisis parmi le Fe, Mo, Nb, Ta, Co, Mn, Cu, Al, Ti, Si, C, S, P et B, ledit alliage ayant, éventuellement, subi un traitement thermique.

6. Procédé selon la revendication 1, **caractérisé en ce que** ledit alliage comprend, en pourcentage massique, entre 50 et 55% de Nickel, entre 17 et 21% de Chrome, entre 2,8 et 3,3% de Molybdène, entre 4,75 et 5,50% de Niobium, entre 0 et 1,0% de Cobalt, entre 0 et 0,35% de Manganèse, entre 0 et 0,30% de Cuivre, entre 0,20 et 0,80% d'Aluminium, entre 0,65 et 1,15% de Titane, entre 0 et 0,35% de Silicium, entre 0 et 0,08% de Carbone, entre 0 et 0,015% de Souffre, entre 0 et 0,015% de Phosphore, et entre 0 et 0,006% de Bore, et le solde de Fer.

7. Procédé selon l'une des revendications précédentes, **caractérisé en ce que** l'usinage d'un axe comporte :
- une première étape de mise en forme d'une première extrémité de l'axe tandis que l'axe est tenu par la machine du côté de sa deuxième extrémité,
- une deuxième étape de reprise par la machine de l'axe du côté de la première extrémité précédemment mise en forme, et
- une troisième étape de mise en forme de la deuxième extrémité tandis que l'axe est tenu par la machine du côté de sa première extrémité.

8. Procédé selon l'une des revendications précédentes, **caractérisé en ce qu'**il comprend une étape d'usinage d'un méplat ou d'une forme asymétrique réalisée par usinage laser au moyen dudit laser, lorsque ladite barre n'est pas en rotation.

9. Procédé selon l'une des revendications précédentes, **caractérisé en ce que**, au cours de l'usinage, les paramètres du laser pourront varier dans les gammes suivantes :
- Puissance moyenne : entre 10 et 100 W ;
- Energie par pulse : entre 20 et 400 µJ ;
- Fréquence : entre 100 et 1000 kHz ;
- Durée d'impulsion : entre 500 fs et 20 ps.

## Patentansprüche

1. Verfahren zur Herstellung einer Unruhwelle aus einer Legierung mit einer spezifischen Schnittkraft von mindestens 2400 N/mm² unter Verwendung einer Maschine, die ein rotierendes Greifelement und einen an einem numerisch gesteuerten Aktuator montierten Bearbeitungslaser umfasst,
wobei das Verfahren die folgenden Schritte umfasst:
- Bereitstellen eines Stabes aus der genannten Legierung,
- Drehen des Stabes um seine Längsachse,
- Formen des Stabes durch Laserbearbeitung, um eine Unruhwelle mit einem Drehzapfen an jedem Ende zu erhalten,
- Durchführen einer tribologischen Endbearbeitung, ohne nach dem Formen ein Rollieren durchzuführen.

2. Verfahren nach Anspruch 1, **dadurch gekennzeichnet, dass** die Welle bei der Formgebung durch Laserbearbeitung mit der Endgeometrie hergestellt wird.

3. Verfahren nach einem der vorstehenden Ansprüche, **dadurch gekennzeichnet, dass** die Drehzapfen der Welle bei der Formgebung durch Bearbeitung mit der Endgeometrie hergestellt werden.

4. Verfahren nach Anspruch 3, **dadurch gekennzeichnet, dass** die Zapfen der Welle bei der tribologischen Endbearbeitung auf ihre Endabmessungen gebracht werden.

5. Verfahren nach Anspruch 1, **dadurch gekennzeichnet, dass** die Legierung aus der Inconel-Familie, welche in Massenprozent mindestens 50 % Nickel, zwischen 13 und 30 % Chrom und Elemente aus der Gruppe Fe, Mo, Nb, Ta, Co, Mn, Cu, Al, Ti, Si, C, S, P und B, ausgewählt ist, wobei die Legierung gegebenenfalls einer Wärmebehandlung unterzogen wurde.

6. Verfahren nach Anspruch 1, **dadurch gekennzeichnet, dass** die Legierung in Massenprozent zwischen 50 und 55 % Nickel, zwischen 17 und 21 % Chrom, zwischen 2,8 und 3,3 % Molybdän, zwischen 4,75 und 5,50 % Niob, zwischen 0 und 1,0 % Kobalt, zwischen 0 und 0,35 % Mangan, zwischen 0 und 0,30 % Kupfer, zwischen 0,20 und 0,80 % Aluminium, zwischen 0,65 und 1,15 % Titan, zwischen 0 und 0,35 % Silizium, zwischen 0 und 0,08 % Kohlenstoff, zwischen 0 und 0,015 % Schwefel, zwischen 0 und 0,015 % Phosphor und zwischen 0 und 0,006 % Bor, und als Rest Eisen.

7. Verfahren nach einem der vorstehenden Ansprüche, **dadurch gekennzeichnet, dass** die Bearbeitung einer Welle umfasst:
- einen ersten Schritt zum Formen eines ersten Endes der Welle, während die Welle von der Maschine an ihrem zweiten Ende gehalten wird,
- einen zweiten Schritt der wiederaufnehmen der Welle durch die Maschine an der Seite des zuvor geformten ersten Endes, und
- einen dritten Schritt der Formgebung des zweiten Endes, während die Welle von der Maschine an der Seite ihres ersten Endes gehalten wird.

8. Verfahren nach einem der vorstehenden Ansprüche, **dadurch gekennzeichnet, dass** es einen Schritt zum Bearbeiten einer Abflachung oder einer asymmetrischen Form umfasst, die mittels des Lasers durch Laserbearbeitung hergestellt wird, während sich der Stab nicht dreht.

9. Verfahren nach einem der vorstehenden Ansprüche, **dadurch gekennzeichnet, dass** während der Bearbeitung die Laserparameter in den folgenden Bereichen variieren können:
- Durchschnittsleistung: zwischen 10 und 100 W;
- Energie pro Impuls: zwischen 20 und 400 µJ;
- Frequenz: zwischen 100 und 1000 kHz;
- Pulsdauer: zwischen 500 fs und 20 ps.

## Claims

1. Method for producing an alloy balance staff having a specific cutting force of 2400 N/mm² or greater, by means of a machine comprising a rotary gripping device and a machining laser mounted on a numerically controlled actuator,
said method comprising the following steps:
- providing a bar of said alloy,
- rotating the bar about its longitudinal axis,
- shaping the bar by laser machining to obtain a balance staff comprising a pivot at each end,
- carrying out a tribological finishing treatment, without performing a burnishing operation after shaping.

2. Method according to claim 1, **characterised in that** the staff is produced with its final geometry during shaping by laser machining.

3. Method according to one of the preceding claims, **characterised in that** the pivots of the staff are produced with their final geometry during shaping by machining.

4. Method according to claim 3, **characterised in that** the pivots of the staff are produced to their final dimensions during the tribological finishing.

5. Method according to claim 1, **characterised in that** said alloy is selected from the Inconel family comprising, by mass percentage, at least 50% nickel, between 13 and 30% chromium and elements selected from Fe, Mo, Nb, Ta, Co, Mn, Cu, Al, Ti, Si, C, S, P and B, said alloy having, optionally, undergone a heat treatment.

6. Method according to claim 1, **characterised in that** said alloy comprises, by mass percentage, between 50 and 55% nickel, between 17 and 21% chromium, between 2.8 and 3.3% molybdenum, between 4.75 and 5.50% niobium, between 0 and 1.0% cobalt, between 0 and 0.35% manganese, between 0 and 0.30% copper, between 0.20 and 0.80% aluminium, between 0.65 and 1.15% titanium, between 0 and 0.35% silicon, between 0 and 0.08% carbon, between 0 and 0.015% sulphur, between 0 and 0.015% phosphorus, and between 0 and 0.006% boron, with the balance being iron.

7. Method according to one of the preceding claims, **characterised in that** the machining of a staff comprises:
- a first step of shaping a first end of the staff whilst the staff is held by the machine at its second end,
- a second step of re-holding the staff by the machine on the side of the first end previously shaped, and
- a third step of shaping the second end whilst the staff is held by the machine on the side of its first end.

8. Method according to one of the preceding claims, **characterised in that** it comprises a step of machining a flat face or an asymmetrical shape by laser machining using said laser, whilst said bar is not rotating.

9. Method according to one of the preceding claims, **characterised in that**, during machining, the laser parameters may vary within the following ranges:
- Average power: between 10 and 100 W;
- Energy per pulse: between 20 and 400 µJ;
- Frequency: between 100 and 1000 kHz;
- Pulse duration: between 500 fs and 20 ps.
